# EUROPÄISCHE PATENTSCHRIFT

(11) **EP 1 435 087 B1**
(45) Veröffentlichungstag und Bekanntmachung des Hinweises auf die Patenterteilung: **31.08.2005**
(21) Anmeldenummer: 02801278.9
(22) Anmeldetag: 01.10.2002
(51) Int. Cl.: G10L 15/06

(54) **VERFAHREN ZUR ERZEUGUNG VON SPRACHBAUSTEINE BESCHREIBENDEN REFERENZSEGMENTEN UND VERFAHREN ZUR MODELLIERUNG VON SPRACHEINHEITEN EINES GESPROCHENEN TESTMUSTERS**
METHOD FOR PRODUCING REFERENCE SEGMENTS DESCRIBING VOICE MODULES AND METHOD FOR MODELLING VOICE UNITS OF A SPOKEN TEST MODEL
PROCEDE DE PRODUCTION DE SEGMENTS DE REFERENCE DECRIVANT DES BLOCS VOCAUX ET PROCEDE DE MODELISATION D'UNITES VOCALES D'UN MODELE DE TEST PARLE

(30) Priorität: 11.10.2001 DE 10150144
(43) Veröffentlichungstag der Anmeldung: 07.07.2004
(73) Patentinhaber: SIEMENS AKTIENGESELLSCHAFT, 80333 München (DE)
(72) Erfinder: KÄMMERER, Bernhard, 82024 Taufkirchen (DE)
(86) Internationale Anmeldenummer: PCT/DE2002/003717
(87) Internationale Veröffentlichungsnummer: WO 2003/034402

(56) Entgegenhaltungen:
- AIBAR P ET AL: "Multiple template modeling of sublexical units" SPEECH RECOGNITION AND UNDERSTANDING. RECENT ADVANCES, TRENDS AND APPLICATIONS. PROCEEDINGS OF THE NATO ADVANCED STUDY INSTITUTE, CETRARO, ITALY, 1-13 JULY 1990, Seiten 519-524, XP008012831 1992, Berlin, Germany, Springer-Verlag, Germany ISBN: 3-540-54032-6 -& NEY H: "The use of a one-stage dynamic programming algorithm for connected word recognition" IEEE TRANSACTIONS OF ACOUSTICS, SPEECH AND SIGNAL PROCESSING, Bd. ASSP-32, Nr. 2, April 1984 (1984-04), Seiten 263-271, XP002228868 USA ISSN: 0096-3518
- ODED GHITZA ET AL: "HIDDEN MARKOV MODELS WITH TEMPLATES AS NON-STATIONARY STATES: AN APPLICATION TO SPEECH RECOGNITION" COMPUTER SPEECH AND LANGUAGE, ACADEMIC PRESS, LONDON, GB, Bd. 7, Nr. 2, 1. April 1993 (1993-04-01), Seiten 101-119, XP000382198 ISSN: 0885-2308

## Beschreibung

Verfahren zur Erzeugung von Sprachbausteine beschreibenden Referenzsegmenten und Verfahren zur Modellierung von Spracheinheiten eines gesprochenen Testmusters

Die Erfindung betrifft ein Verfahren zur Erzeugung von Sprachbausteine beschreibenden Referenzsegmenten und ein Verfahren zur Modellierung von Spracheinheiten eines gesprochenen Testmusters in Spracherkennungssystemen.

Früher übliche Spracherkennungssysteme beruhen auf dem Dynamic Time Warping (DTW) Prinzip. Hierbei wird für jedes Wort eine vollständige Folge von Merkmalvektoren - gewonnen aus einer Trainingsäußerung für dieses Wort - als Referenzmuster abgespeichert und in der operativen Phase mit einem Testmuster eines zu erkennenden Sprachsignals mittels einer nichtlinearen Abbildung verglichen. Mit dem Vergleich wird der minimale Abstand zwischen dem jeweiligen Referenzmuster und dem Testmuster ermittelt und das Referenzmuster mit dem geringsten Abstand zum Testmuster wird als das das Testmuster geeignet beschreibende Referenzmuster ausgewählt.

Bei diesem Verfahren ist nachteilig, dass für jedes zu erkennende Wort ein Referenzmuster hinterlegt werden muss, wodurch das die Referenzmuster enthaltende Codebuch sehr umfangreich ist und der Aufwand ein derartiges Spracherkennungssystem zu trainieren, wobei für jedes Wort ein Referenzmuster gespeichert wird, entsprechend groß ist. Hierbei ist es nicht möglich, Referenzmuster für vom gelernten Sprachwortschatz abweichende Wörter zu generieren. Gemäß dieser Veröffentlichung werden die die Referenzmuster darstellenden Merkmale, die jeweils für aufeinanderfolgende Analysefenster im Abstand von z.B. 10 ms mittels der Autokorrelationsfunktion erhalten werden, und nachfolgend als Autokorrelationsmerkmale bezeichnet werden, und die spektralen Merkmale erläutert. Die Autokorrelationsmerkmale beschreiben das im Analysefenster enthaltene Sprachsignal im Zeitbereich und die spektralen Merkmale, die mittels einer Fourier-Transformation erhalten werden, beschreiben die Sprachsignale im Frequenzbereich. Ferner sind einige unterschiedliche Abstandsmaße zum Ermitteln eines Abstandes zwischen zwei Merkmalvektoren erläutert. Zur Verbesserung der sprecherunabhängigen Erkennung werden bei diesem bekannten Verfahren für jedes Wort mehrere Referenzmuster erzeugt, wobei die Referenzmuster wiederum aus mehreren Trainingssignalen gemittelt werden. Hierbei kann sowohl die Zeitstruktur der gesamten Referenzmuster als auch die Merkmalsstruktur gemittelt werden. Zur Erzeugung von Gruppen von Referenzmustern, die jeweils einem Wort zugeordnet sind, und eine gemittelte Zeitstruktur aufweisen, werden Trainingsmuster nichtlinear auf ein diesem Wort bzw. dieser Wortklasse zugeordnetes mittleres Muster abgebildet und danach eine Clusterung der Merkmalvektoren des Trainingsmusters und der bereits in der Klasse vorliegenden Referenzmuster für jedes Analysefenster getrennt ausgeführt.

Mit diesem speziellen Verfahren kann eine sehr gute Erkennungsrate erzielt werden, aber es unterliegt jedoch den oben bereits erläuterten Nachteilen des DTW-Verfahrens.

Neuere Spracherkennungssysteme basieren auf dem HMM-Verfahren (Hidden Markov Modellierung). Hierbei werden in der Trainingsphase aus vielen Sprachsignalen von verschiedenen Wörtern Sprachsegmente (zum Beispiel Phoneme oder Silben) gesammelt und in Knoten unterteilt (z.B. je ein Knoten für Anlaut-Mitte-Auslaut). Die die Sprachsignale beschreibenden Merkmalvektoren werden dem Knoten zugeordnet und in einem Codebuch gespeichert.

Bei der Spracherkennung wird das Testmuster mittels einer nichtlinearen Abbildung (z.B. mithilfe des Viterbi-Algorithmus') auf eine durch die Transkription (z.B. eine phonetische Beschreibung) des Wortes definierte Abfolge von Knoten abgebildet. Da die Knoten nur Wortsegmente beschreiben, können durch Konkatinierung der Knoten bzw. Segmente Referenzmuster für nahezu beliebige Wörter einer Sprache erzeugt werden. Da es in einer Sprache in der Regel deutlich weniger Phoneme bzw. Silben als Wörter gibt, ist die Anzahl der Knoten wesentlich geringer als die Anzahl der beim DTW-Verfahren zu speichernden vollständige Wörter beschreibenden Referenzmuster. Hierdurch wird der Trainingsaufwand des Spracherkennungssystems gegenüber dem DTW-Verfahren deutlich reduziert.

Bei diesem Verfahren ist jedoch nachteilig, dass innerhalb eines Knotens die zeitliche Abfolge von Merkmalvektoren nicht mehr feststellbar ist. Dies ist insbesondere bei langen Segmenten - wie zum Beispiel einem gedehnten "a" - problematisch, bei denen oftmals sehr viele Merkmalvektoren ähnlicher Knoten passen, obwohl die zeitliche Abfolge der Vektoren nicht übereinstimmt. Hierdurch kann die Erkennungsrate erheblich beeinträchtigt sein.

In Aibar P. et al.: "Multiple template modeling of sublexical units", in: "Speech Recognition and Understanding", Seiten 519 bis 524, Springer Verlag, Berlin, 1992 sowie in Castro M. J. et al.: "Automatic selection of sublexic templates by using dynamic time warping techniques", in: "Proceedings of the European Signal Processing Conference", Band 5, Nr. 2, Seiten 1351 bis 1354, Barcelona, 1990 wird eine Segmentierung eines Trainings-Sprachsignals in Sprachbausteine und eine Analyse zum Erhalt eines Merkmalvektors beschrieben. Dabei werden auch Mittelungen vorgenommen. In Ney H.: "The use of a one-stage dynamic programming algorithms for connected word recognition", in: "IEEE Transactions of Acoustics, Speech, and Signal Processing", Seiten 263 bis 271, Bd. ASSP-32, Nr. 2, 1984 wird eine Erkennung von Wörtern in einem kontinuierlich geäußerten Satz offenbart, bei der ein Referenztemplate für jedes Wort verwendet wird.

Der Erfindung liegt deshalb die Aufgabe zugrunde, ein , Verfahren zur Erzeugung von Sprachbausteine beschreibenden Referenzsegmenten und ein Verfahren zur Modellierung von Spracheinheiten zu schaffen, mit welchen in einem Spracherkennungssystem hohe Erkennungsraten bei geringem Trainingsaufwand erzielt werden können.

Die Aufgabe wird durch ein Verfahren zur Erzeugung von Sprachbausteine beschreibenden Referenzsegmenten mit den Merkmalen des Anspruchs 1 und durch ein Verfahren zur Modellierung von Spracheinheiten mit den Merkmalen des Anspruchs 8 gelöst. Vorteilhafte Ausgestaltungen der Erfindung sind in den Unteransprüchen angegeben.

Das Verfahren verwendet bzw. erzeugt Sprachbausteine beschreibende Referenzsegmenten, die zeitlich strukturierte Merkmalen enthalten.

Diese Referenzsegmente werden in einer Trainingsphase erzeugt, die bspw. folgendermaßen ablaufen kann:
- Auswahl von geeigneten Wort-Untereinheiten als Sprachbausteine (Phoneme, Diphone, Silben,...)
- Ermittlung einer mittleren zeitlichen Struktur für die Abfolge der Merkmalvektoren für die gewählten Sprachbausteine aus einer Vielzahl von Sprachbeispielen,
- Auswahl und Zuordnung von Merkmalvektoren für jedes der Zeitfenster der typischen zeitlichen Struktur,
- Abspeicherung der dadurch bestimmten Muster für jeden Sprachbaustein, die die Referenzsegmente darstellen und aus Merkmalvektoren ausgebildet sind, die entsprechend der zeitlichen Struktur in einem Codebuch angeordnet werden.

Die Erkennungsphase kann bspw. folgendermaßen ablaufen:
- Kombinieren der Referenzsegmente zu einem Referenzmuster für eine Spracheinheit, wie z.B. ein zu erkennendes Wort (z.B. entsprechend der phonetischen Beschreibung dieses Wortes),
- Durchführen eines nichtlinearen Vergleiches des zu erkennenden Testmusters mit den Referenzmustern und Bestimmen jeweils eines Gesamtabstandes zwischen den Referenzmustern und dem Testmuster, wobei für jedes Zeitfenster der minimale Abstand zwischen dem Merkmalvektor des Testmusters und den über den nichtlinearen Vergleich zugeordneten typischen Merkmalvektoren der Sprachbausteinen verwendet wird,
- Auswahl des Referenzmusters mit dem geringsten Abstand zum Testmuster.

Das erfindungsgemäße Verfahren verwendet ein Codebuch, in dem Sprachbausteine beschreibende Referenzsegmente mit zeitlich strukturierten Merkmalen enthalten sind, d.h., dass die Merkmale in einer bestimmten Abfolge als Referenzsegmente gespeichert sind.

Ganz besonders wesentliche Vorteile ergeben sich, wenn die einzelnen Sprachbausteine eines Referenzmusters, wie zum Beispiel eines Wortes, beispielsweise ein Phonem, ein Diphon, ein Triphon oder eine Silbe sind. So lassen sich nämlich die Vorteile von DTW- und HMM-Systemen kombinieren, indem einerseits die Zeitstruktur erhalten bleibt, andererseits aber auch Referenzmuster für neue Wörter aus vorhandenen Silben generiert werden können.

Diese Sprachbausteine werden von Referenzsegmenten mit typischer zeitlicher Struktur beschrieben, wobei für jeden Zeitabschnitt eines Sprachbausteins ein oder mehrere Merkmalvektoren vorgesehen sein können. Diese Folgen von Merkmalen bzw. Merkmalvektoren mit den jeweiligen alternativen Merkmalen pro Zeitfenster beschreiben die Sprachbausteine, wie sie typischerweise in den Trainingsmustern aufgetreten sind. Durch die Kombination mehrerer Referenzsegmente zu einem Referenzmuster wird ein Referenzmuster erhalten, dessen Sprachbausteine die im Training des Spracherkennungssystems ermittelte zeitliche Struktur beinhaltet, wodurch das derart gebildete Referenzmuster zeitlich genauso fein strukturiert ist, wie es bei dem bekannten DTW-Verfahren der Fall ist.

Da die Referenzsegmente jedoch jeweils nur einzelne Sprachbausteine beschreiben, müssen in der Trainingsphase lediglich diese, die Sprachbausteine erzeugenden Referenzsegmente, erzeugt werden, deren Anzahl wesentlich geringer ist, als die Anzahl der Referenzmuster nach dem DTW-Verfahren.

Im Vergleich zu bekannten auf dem HMM-Verfahren beruhenden Spracherkennungssystemen wird mit dem erfindungsgemäßen Verfahren eine wesentlich feinere zeitliche Strukturierung der Referenzmuster erhalten, da die einem Knoten des HMM-Verfahrens zugeordneten Merkmalvektoren ohne zeitliche Informationen abgespeichert sind und hierdurch das HMM-Verfahren keinerlei zeitliche Strukturierung innerhalb eines Knotens aufweist. Dieser Unterschied führt zu einer wesentlichen Steigerung der Erkennungsrate durch das erfindungsgemäße Verfahren gegenüber dem HMM-Verfahren.

Gegenüber dem bekannten HMM-Verfahren ist weiterhin vorteilhaft, dass es nicht notwendig ist, spezielle, den Kontext - d.h. die Nachbarsegmente - berücksichtigende Referenzsegmente zu erzeugen, da die größere Varianz in den Übergangsbereichen zwischen benachbarten Sprachbausteinen durch zusätzliche Merkmalsalternativen pro Zeitfenster dargestellt werden können. Zudem werden mit der Erfindung zeitlich lange Sprachbausteine in mehrere Zeitfenster unterteilt als kurze Sprachbausteine, wodurch die Beschreibung der einzelnen Sprachbausteine sowohl bei kurzen als auch bei langen Sprachbausteinen mit gleicher Qualität erfolgt. Bei dem bekannten HMM-Verfahren dagegen werden die Sprachbausteine durch eine bestimmte, willkürlich festgelegte Anzahl Knoten dargestellt, die unabhängig von der Länge der Sprachbausteine ist.

Das erfindungsgemäße Verfahren zum Erzeugen von Referenzsegmenten zur Modellierung von Spracheinheiten umfasst folgende Schritte:
- Segmentieren des Trainings-Sprachsignals in Sprachbausteine entsprechend einer vorgegebenen Transkription,
- Analysieren des Trainingssignals in einem vorbestimmten Zeitraster mit bestimmten Zeitfenstern zum Erhalten von zumindest einem Merkmalvektor für ein jedes Zeitfenster, wodurch Trainingsmuster ausgebildet werden, die jeweils Merkmalvektoren in der zeitlichen Abfolge des Trainings-Sprachsignals enthalten,
- Ermittlung einer mittleren Zeitstruktur für einen jeden Sprachbaustein mit einer Folge von Zeitfenstern,
- Zuordnen mittels einer zeitlich nichtlinearen Abbildung der Merkmalvektoren den Zeitfenstern der Sprachbausteine und Abspeichern der jeweils einem Sprachbaustein zugeordneten Merkmalvektoren in der durch die Zeitfenster vorgegebenen Abfolge als Referenzsegment.

Mit diesem Verfahren werden Referenzsegmente erzeugt, die Merkmalvektoren beinhalten, die in der zeitlichen Abfolge des Trainings-Sprachsignals vorliegen und die jeweils einem Sprachbaustein zuordenbar sind. Hierdurch wird die Zeitstruktur des Trainings-Sprachsignals auf die Referenzsegmente abgebildet und da die Referenzsegmente jeweils einen Sprachbaustein zuordenbar sind, ist es möglich, aus den Referenzsegmenten ein einem Wort entsprechendes Referenzmuster zu konkatinieren.

Die Erfindung wird nachfolgend beispielhaft anhand der Zeichnungen näher erläutert. In den Zeichnungen zeigen:
- Fig. 1: schematisch das Verfahren zur Erzeugung von Referenzsegmenten (in der Trainingsphase),
- Fig. 2: schematisch geclusterte Merkmalvektoren des Sprachbausteines "a", die aus Sprachbeispielen mit verschiedenen Kontext gewonnen worden sind,
- Fig. 3: das Verfahren zur Modellierung von Spracheinheiten in einem Flussdiagramm, und
- Fig. 4: schematisch eine Abbildungsmatrix mit den Referenzmustern, gebildet aus Referenzsegmenten und dem Testmuster,
- Fig. 5: Spracherkennung in einem HMM-Spracherkennungssystem,

- Fig. 6: Bestimmung der mittleren Zeitfolge bei der Phonemstruktur "ts",
- Fig. 7: Bestimmung der mittleren Zeitfolge bei der Phonemstruktur "ai",
- Fig. 8: bei der Mittelung verwendete Verfahren zur nichtlinearen Abbildung sowie die Projektion auf eine resultierendes Muster,
- Fig. 9: Suche bei der Erkennung mit States entsprechend HMM- Spracherkennungssystem nach dem Stand der Technik,
- Fig. 10: Suche bei der Erkennung mit Referenzmustern nach dem vorgeschlagenen Verfahren.

Das erfindungsgemäße Verfahren zur Modellierung von Sprachbausteinen in Spracherkennungssystemen verwendet ein Codebuch, in dem Referenzsegmente gespeichert sind, die jeweils einen Sprachbaustein mit zeitlich strukturierten Merkmalen beschreiben. Im vorliegenden Ausführungsbeispiel stellen die Sprachbausteine jeweils Phoneme oder Diphthonge dar und die zeitlich strukturierten Merkmale sind spektrale Merkmalvektoren, die in den Referenzsegmenten in der Reihenfolge gespeichert sind, die einem typischen Sprachsignal des jeweiligen Sprachbausteins entspricht.

Die Referenzsegmente sind in Zeitfenster unterteilt, wobei jedem Zeitfenster mehrere Merkmalvektoren als Alternativen zugeordnet sein können. Kurze Phoneme, wie z.B. ein "t", können lediglich ein einziges Zeitfenster aufweisen. In der Regel sind jedoch mehrere Zeitfenster vorgesehen, deren Anzahl sich durch die Dauer der einzelnen Phoneme bzw. Diphthonge bei der Erzeugung der Referenzsegmente geteilt durch die Dauer der Zeitfenster ergibt.

Die Anzahl der Merkmalvektoren pro Zeitfenster kann variieren. Im vorliegendem Ausführungsbeispiel ist die maximale Anzahl Merkmalvektoren pro Zeitfenster auf drei begrenzt. Im Rahmen der vorliegenden Erfindung kann es auch zweckmäßig sein, die maximale Anzahl Merkmalvektoren auf wesentlich größere Werte, wie z.B. 10 bis 15, zu begrenzen oder keine entsprechende Grenze vorzusehen.

Das grundsätzliche Prinzip der vorliegenden Erfindung liegt darin, dass für die Erkennungsphase die zeitlich strukturierten Referenzsegmente zu einem Referenzmuster kombiniert werden und das Referenzmuster mit einem Testmuster verglichen wird, das von einem gesprochenen und zu erkennenden Sprachsignal abgeleitet wird.

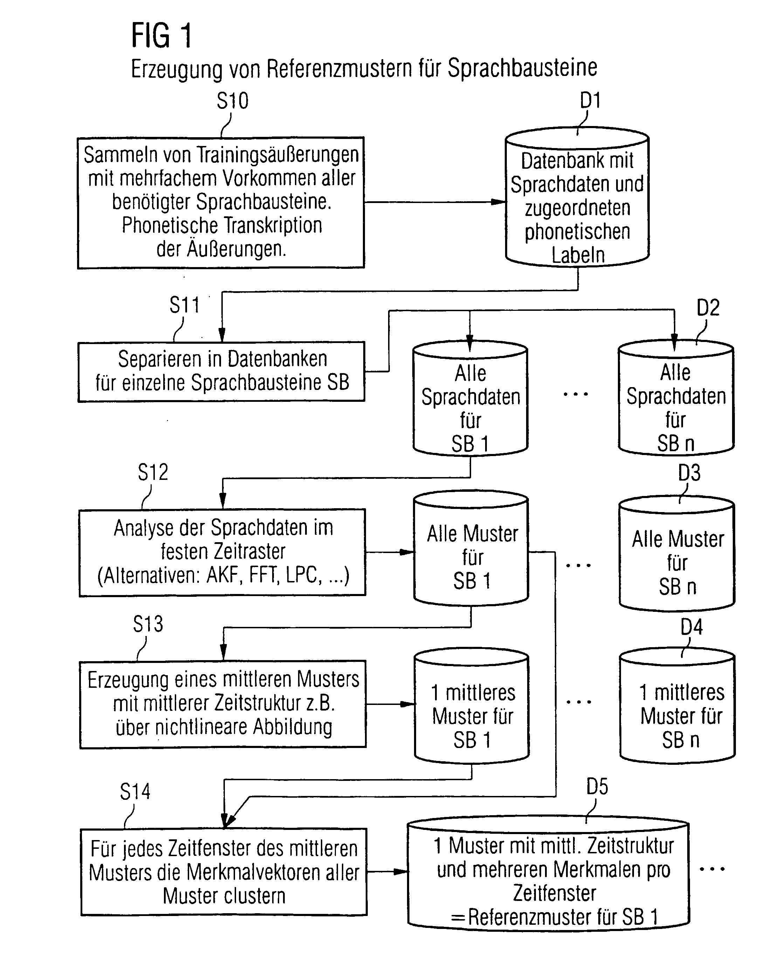

Figur 1 zeigt den Ablauf eines Verfahrens zum Erzeugen von Referenzsegmenten zur Modellierung von Spracheinheiten. Das Verfahren beginnt mit dem Sammeln von Trainingsäußerungen mit mehrfachem Vorkommen aller benötigter Sprachbausteine (S10) zusammen mit der korrespondierenden Transkription. Diese Daten werden in einer die gesprochenen Sprachsignale und die korrespondierenden phonetischen Label umfassenden Datenbank D1 hinterlegt. Der Inhalt dieser Datenbank D1 wird entsprechend einer vorgegebenen Transkription in Datensätze D2 separiert, die jeweils einem einzelnen Phonem oder Diphthong oder anderen geeigneten Sprachbausteinen zugeordnet sind (S11).

Die in den Datensätzen D2 gespeicherten Sprachdaten werden in einem festen Zeitraster analysiert, d.h., dass die Trainings-Sprachsignale in die Zeitfenster t unterteilt werden, wodurch Trainingsmuster erhalten werden, die jeweils Merkmalvektoren in der zeitlichen Abfolge des Trainings-Sprachsignals enthalten und jeweils einem Sprachbaustein zuordenbar sind. Diese Trainings-Muster werden in den Datensätzen D3 gespeichert.

Für jeden Sprachbaustein wird ein mittleres Trainingsmuster mit einer gemittelten Zeitstruktur und einer gemittelten Merkmalsstruktur bestimmt. Dabei wird für die vorhandenen Muster eines Sprachbausteins ein mittlerer zeitlicher Verlauf sowie auch eine mittlere Ausprägung der Merkmale ermittelt. Dies kann bspw. über eine nichtlineare Abbildung erfolgen, wie sie z.B. in den Kapiteln 4.2 und 4.3 von "Sprecherunabhängigkeit und Sprechadaption", Bernhard R. Kämmerer, Informatik Fachberichte 244, Springer Verlag, 1990 beschrieben ist. Hierbei wird aus den individuellen Zeitstrukturen der Trainingsmuster zunächst über eine nichtlineare Abbildung eine mittlere zeitliche Struktur gewonnen und die dabei zugeordneten Merkmalvektoren gemittelt. Diese mittleren Muster werden in Datensätze D4 gespeichert.

Durch eine repräsentative mittlere Zeitstruktur, d.h. eine mittlere Ausprägung von Änderungsdauer und zeitlicher Abfolge von Merkmalen der Sprachbausteine, bleibt die Möglichkeit der nichtlinearen Zeitanpassung erhalten, kleinere Verzerrungen auszugleichen.

Aus den in den Datensätzen D3 und D4 gespeicherten Daten werden für jedes Zeitfenster des mittleren Musters eines bestimmten Sprachbausteins die Merkmalvektoren aller Muster geclustert (S14). Als Clusterverfahren können bekannte Ansätze wie k-means, Leader-Algorithmus o.ä. zum Einsatz kommen. Hieraus ergibt sich für jeden Sprachbaustein ein Muster, das durch einen oder mehrere Merkmalvektoren pro Zeitfenster dargestellt wird. Diese Muster bilden die erfindungsgemäßen Referenzsegmente, die in weiteren Datensätze D5 gespeichert werden. Die Datensätze D5 bilden das Ergebnis des erfindungsgemäßen Verfahrens und sind die Grundlage für die nachfolgende Erkennung.

Durch eine Kombination der Mittelung zeitlicher Strukturen mit einer Clusterung der zugeordneten Merkmale können die erwähnten Nachteile von HMM-Spracherkennern vermieden werden.

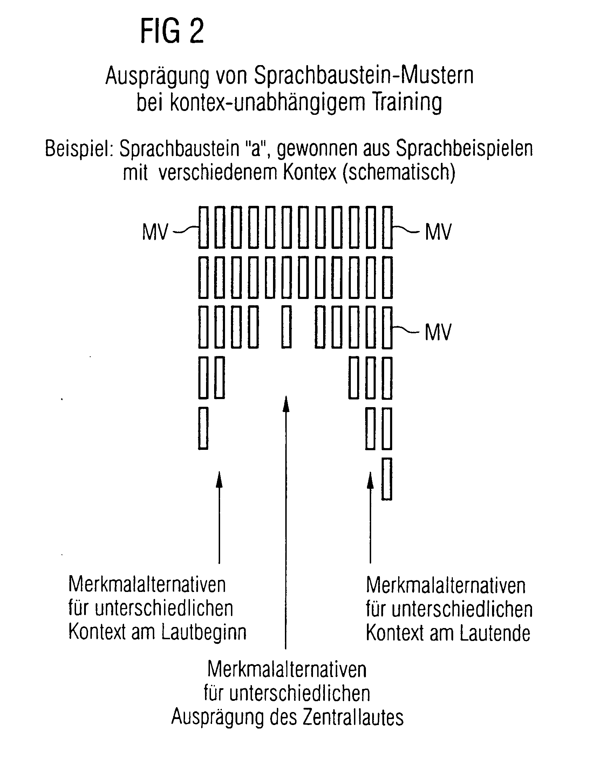

Fig. 2 zeigt schematisch die geclusterten Merkmalvektoren des Sprachbausteines "a", die aus Sprachbeispielen mit verschiedenem Kontext gewonnen worden sind. Hierbei wird pro Zeitfenster keine feste Anzahl von alternativen Merkmalvektoren vorgesehen, sondern es wird dem ClusterVerfahren überlassen, entsprechend der Varianz die Anzahl festzulegen. Im mittigen Bereich ergeben sich weniger Merkmalvektoren als im Randbereich, da die Merkmalvektoren unterschiedlicher Sprachbeispiele im mittigen Bereich sehr ähnlich zueinander sind, jedoch aufgrund der unterschiedlichen Kontexte sich im Randbereich stark unterscheiden. Dementsprechend ergeben sich an den Randbereichen als Ergebnis des Cluster-Verfahrens mehr Merkmalvektoren, die diese Unterschiede darstellen.

Da die kontextabhängigen Unterschiede an den Randbereichen der Sprachbausteine durch alternative Merkmalvektoren dargestellt werden können, ist es nicht notwendig, komplette Referenzsegmente für Sprachbausteine in unterschiedlichen Kontexten zu bilden, wie es bei bekannten HMM-Verfahren der Fall ist, wodurch die Anzahl der Sprachbausteine bei der Erfindung wesentlich geringer gehalten werden kann.

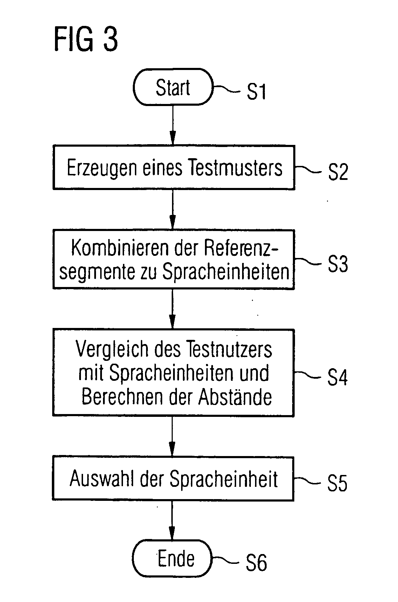

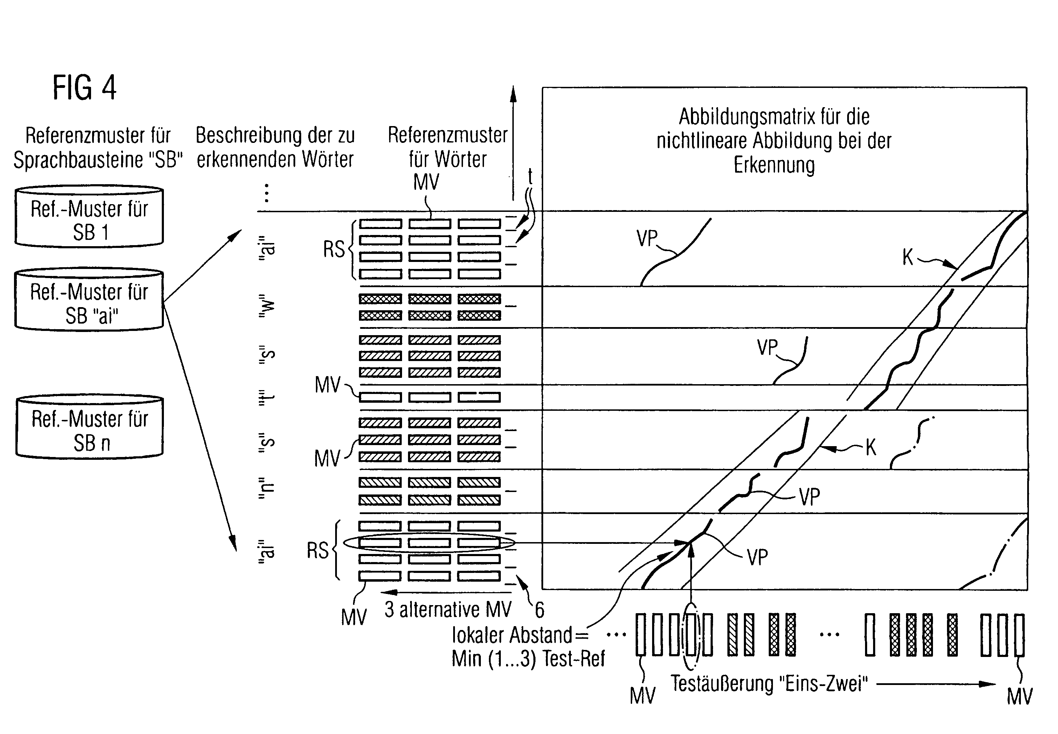

Figur 3 zeigt schematisch das erfindungsgemäße Verfahren zur Modellierung von Spracheinheiten eines gesprochenen Testmusters in Spracherkennungssystemen in Form eines Flussdiagramms. In Figur 4 ist für die Situation der Erkennung einer Testäußerung eine Abbildungsmatrix in Form eines Koordinatensystems aufgezeigt.

Dieses Verfahren verwendet ein Codebuch, in dem die zeitlich strukturierten Referenzsegmente gespeichert sind. Im vorliegenden Ausführungsbeispiel stellen die Sprachbausteine jeweils Phoneme oder Diphthonge dar und die zeitlich strukturierten Merkmale sind spektrale Merkmalvektoren, die in den Referenzsegmenten in der Reihenfolge gespeichert sind, die einem typischen Sprachsignals des jeweiligen Sprachbausteins entspricht. Das Verfahren verwendet ferner eine Datenbank in der Spracheinheiten in ihrer phonetischen Beschreibung gespeichert sind. Im vorliegenden Ausführungsbeispiel sind die Spracheinheiten Wörter und die phonetische Beschreibung der in Fig. 4 gezeigten Wörter "eins" und "zwei" lautet:
"ai" "n" "s" und "t" s" "w" "ai"

Das Verfahren beginnt mit dem Schritt S1.

Im Schritt S2 wird ein von einem Spracherkennungssystem zu erkennendes Sprachsignal in ein Testmuster umgesetzt, wobei das Sprachsignal in korrespondierende spektrale Merkmalvektoren gewandelt wird. Diese Merkmalvektoren des Testmusters sind entlang der Abszisse schematisch dargestellt.

Im Schritt S3 werden die Referenzsegmente entsprechend der phonetischen Beschreibung der in der Datenbank gespeicherten Wörter zu jeweils einem Referenzmuster konkatiniert.

Da in den Referenzsegmenten die Merkmalvektoren bestimmten Zeitfenstern t zugeordnet sind und deren Reihenfolge festgelegt ist, bilden die Referenzmuster eine sich über mehrere Phoneme und Diphthonge erstreckende Folge von zeitlich geordneten und damit zeitlich strukturierten Merkmalvektoren.

Neben der Ordinate sind schematisch die einzelnen Phoneme und Diphthonge für die Wörter "eins" und "zwei", nämlich "ai", "n", "" und "t" ... "ai" zusammen mit den entsprechenden Referenzsegmenten dargestellt. Diese Referenzsegmente RS sind entsprechend der Zeitfenster t der Analysephase in 1 bis 4 Zeitfenster t einer vorbestimmten Dauer unterteilt. Jedes Referenzsegment weist hierbei für jedes Zeitfenster jeweils drei Merkmalvektoren MV auf.

Im Schritt S4 werden die Merkmalvektoren des Testmusters mit einer nichtlinearen Zeitabbildung auf die Merkmale der Referenzsegmente der Referenzmuster (= Kombinationen aufeinanderfolgender Merkmalvektoren eines Wortes) abgebildet. Derartige nichtlineare Abbildungen können gemäß den früher gebräuchlichen DTW-Verfahren oder gemäße dem Viterbi-Algorithmus ausgeführt werden. Diese nichtlinearen Abbildungen sind sowohl für die Erkennung isoliert wie auch zusammenhängend gesprochener Wörter (fließende Rede) geeignet.

Bei dieser Abbildung werden die Testmuster auf alle Referenzmuster abgebildet und zwischen den Referenzmustern und dem Testmuster werden die jeweiligen Abstände nach einem vorbestimmten Abstandsmaß berechnet. In der Abbildungsmatrix sind Verzerrungspfade VP gezeigt, mit welchen die Merkmalvektoren des Testmusters auf die Referenzmuster abgebildet werden.

Aus dem Stand der Technik sind unterschiedliche Abstandsmaße bekannt (siehe z.B. Kapitel 3.5.1 in Bernhard R. Kämmerer: "Sprecherunabhängigkeit und Sprechadaption", Informatikfachbereich 244, Springer Verlag, 1990).

Bei der Abbildung wird jedoch gegenüber früheren Verfahren bei jeder Zuordnung eines Zeitfensters der Testäußerung zu einem Zeitfenster der Referenzmuster der kleinste Abstand zwischen dem Test-Merkmalvektor und den vorhandenen alternativen Referenz-Merkmalvektoren gebildet.

Entsprechend der Vorschriften der nichtlinearen Abbildung werden diese minimalen Einzelabstände entlang des Verzerrungspfads zu einem Gesamtabstand für das Wort akkumuliert.

Im Rahmen der Erfindung ist es auch möglich, bekannte Pruning-Verfahren beim Vergleichen der Testmuster mit den Referenzmustern zu verwenden oder die Anzahl der mit dem Testmuster zu vergleichenden Referenzmuster durch die Verwendung von Sprachmodellen zu beschränken.

Im Schritt S5 wird das Referenzmuster, das den kleinsten Gesamtabstand zum Testmuster aufweist, als Erkennungsergebnis ausgewählt. Die fett gedruckten Verzerrungspfade zeigen die Abbildung auf das ausgewählte Referenzmuster an.

Vorzugsweise wird die maximale Verzerrung der Verzerrungspfade auf einen bestimmten Arbeitsbereich beschränkt, d.h., dass nicht mehr als eine bestimmte Anzahl n Merkmalvektoren des Testmusters auf ein Zeitfenster des Referenzmusters und nicht ein Merkmalvektor auf mehr als die bestimmte Anzahl n Testfenster abgebildet werden darf. n ist eine ganze Zahl im Bereich 2 bis 5. Dies hat zur Folge, dass der Verzerrungspfad in der Abbildungsmatrix innerhalb eines Korridors K verläuft (Figur 4).

Bei dem oben beschriebenen Verfahren beschreibt jeder Merkmalvektor ein Sprachsignal für ein Zeitfenster mit vorbestimmter Dauer, die im Bereich von 5 ms bis 20 ms liegt und vorzugsweise 10 ms beträgt. Anstelle von spektralen Merkmalen können auch Autokorrelationsmerkmale oder andere geeignete Merkmale, wie z.B. LPC-Merkmale (Linear Prediction Coefficients), MFCC-Merkmale (Melfilter Coeficients) oder CC-Merkmale (Capstral-Coeficients), verwendet werden.

Bei obigem Beispiel stellt jedes Referenzsegment ein Phonem oder Diphthong dar. Im Rahmen der Erfindung ist es jedoch möglich, dass die Referenzsegmente Diphone, Triphone, Silben oder andere geeignete Untereinheiten darstellen. Ebenso kann eine Spracheinheit neben einem Wort auch eine Phrase oder dgl. darstellen.

Die erfindungsgemäßen Referenzsegmente beschreiben mittels Merkmalvektoren Sprachbausteine, wobei die Merkmalvektoren in einer typischen Reihenfolge abgespeichert sind, die sich aus den Trainings-Sprachdaten ergibt. Zu jedem Merkmalvektor werden alternative Merkmalvektoren angegeben. Bei der Modellierung von größeren Spracheinheiten werden die Referenzsegmente zur Beschreibung der Spracheinheiten kombiniert, wodurch mit geringem Trainingsaufwand beliebige Wörter erkennbar werden. Die Erkennung basiert auf einer nichtlinearen Abbildung, wobei die alternativen Merkmalvektoren für die Ermittlung der lokale Übereinstimmung heran gezogen werden. Die nichtlineare Abbildung kann sowohl für einzeln gesprochene Wörter wie auch für zusammenhängende Sprache genutzt werden kann.

Die Unterschiede zu HMM-Spracherkennern und das Ermitteln der mittleren Zeitstruktur sollen im Folgenden anhand der Abbildungen 1 bis 5 noch einmal im Detail erläutert werden.

Bei State-of-the-Art HMM-Spracherkennungssystemen mit sprecherunabhängiger Erkennung werden für das Training einer Sprache von sehr vielen Sprechern Sprachproben gesammelt. Dabei erfolgt die Auswahl der Referenzen für die spätere Erkennungsphase derart, dass
1. Trainingsäußerungen nach Vorgabe gesprochen wird,
2. die resultierenden Sprachsignale im festen Raster (10ms - 20 ms) (Frequenz-) analysiert und die Merkmale abgespeichert werden,
3. die Merkmalabfolge (iterativ) entsprechend der phonetischen Transkription zeitlich unterteilt wird, wobei meistens jedes Phonem zusätzlich noch durch eine feste Anzahl von States (z.B. 3 States: Phonembeginn - Phonemkern - Phonemende) unterteilt werden,
4. aus den einzelnen Merkmalen aller Abschnitte aus allen Äußerungen, die einem State entsprechen, eine Menge an Repräsentanten ausgewählt werden (z.B. über Clustering-Verfahren), die für die spätere Erkennungsphase in einem "Code-Book" abgelegt werden. Alternativ dazu können auch Verteilungen über die Merkmalkomponenten abgelegt werden.

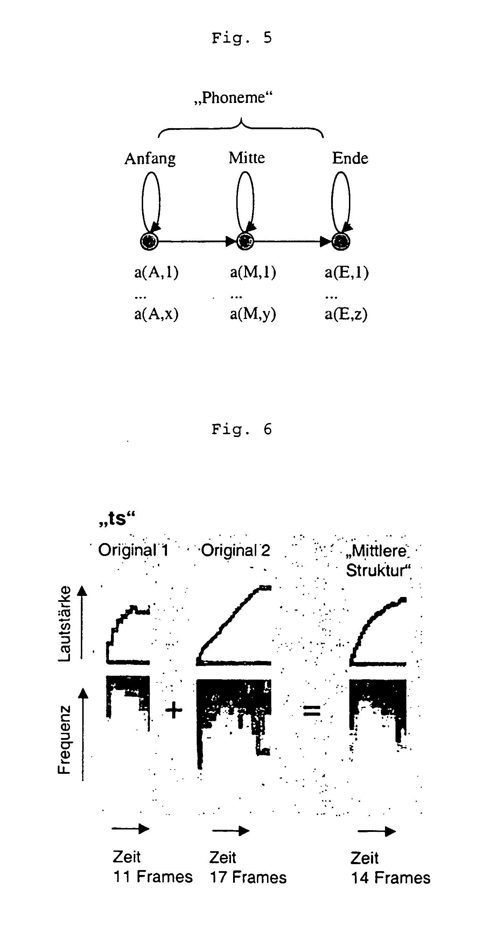

Danach sind also im Code-Book für jedes Phonem z.B. 3 Gruppen mit jeweils mehreren Repräsentanten vertreten: Z.B. wie in Figur 5 dargestellt für das Phonem "a":
Anfang Merkmal a(A,1)
   . . .
   Merkmal a(A,x)
Mitte Merkmal a(M,1)
   . . .
   Merkmal a(M,y)
Ende Merkmal a(E,1)
   . . .
   Merkmal a(E,z)

Wichtig ist, dass es innerhalb der States keine Reihenfolge der Merkmale mehr gibt. Alle können an jeder Stelle mit der gleichen Wahrscheinlichkeit auftreten.

In der Erkennungsphase (Viterbi-Suche) werden die Merkmale des zu erkennenden Signals mit den Repräsentanten verglichen (z.B. Abstandsberechnung). Innerhalb eines States wird dann der minimale Abstand ausgewählt. Dabei spielt die ursprüngliche Reihenfolge der Merkmale innerhalb eines States keine Rolle. Die Verweildauer in einem State wird entweder über die feste Widerhol-Wahrscheinlichkeit im Vergleich zur Übergangswahrscheinlichkeit zum nächsten State definiert (exponentielle Abnahme der Gesamtwahrscheinlichkeit entsprechend der Anzahl der Widerholungen) oder über eine aus den Trainingsdaten bestimmte mittlere Dauer (z.B. Gaus'sche Wahrscheinlichkeitsverteilung um die Dauer herum) geregelt. Die Grobstruktur wird nur durch die Abfolge der States definiert (d.h. bei der nichtlinearen Abbildung (Viterbi) muss zunächst vom "Anfang"-State über den "Mitte"-State zum "Ende"-State gegangen werden.

Daraus ergeben sich folgende Nachteile:
- Nicht-adäquate zeitliche Repräsentation. Die feste Aufteilung in z.B. 3 States wird der sehr unterschiedlichen Dauer der realen Ausprägungen von Phonemen nicht gerecht. Ein "a" oder ein Gleitlaut "ai" z.B. kann sehr lange dauern (vielleicht 20 Analysefenster = 200 ms), dann werden sehr viele Merkmale auf einen State abgebildet. Dies entspricht einer unverhältnismäßig groben Darstellung. Ein "p" kann sehr kurz sein (vielleicht nur 3 Analyse-Fenster), woraus eine überfeine Modellierung resultiert.
- Verringerte Selektivität. Bei langen Phonemen kann die Viterbi-Suche sich den günstigsten Repräsentanten pro State heraussuchen. Dies kann dazu führen, dass z.B. ein Repräsentant, der eigentlich für das Ende des States steht, für einen großen Bereich des Testsignals herangezogen wird. Daraus resultiert u.U. ein insgesamt zu geringer Gesamtabstand und ein Verlust an Unterscheidbarkeit, Insbesondere sind hier Wörtern betroffen, deren Phoneme ähnlich sind und durch Analysefehler eine gewisse Überlappung der Merkmale entsteht.
- Grobe zeitliche Verzerrung bei der Abbildung. Da das Testsignal "voll aufgelöst" (d.h. in der originalen 10ms-Abfolge der Merkmale), die Referenzen aber mit den wenigen States dargestellt werden, muss die Abbildung auch größere Abschnitte des Testsignals auf einen State mappen. Dadurch geht verloren, dass sich die Sprechgeschwindigkeit nur in engen Grenzen ändern kann. (Ein üblicher Effekt dabei ist, dass z.B. Diktiersysteme besser mit schnell gesprochenen Äußerungen umgehen können als mit normal oder langsam gesprochenen).

Diese Nachteile sollen durch die Erfindung gemindert und/oder beseitigt werden.

Hierbei werden die Phoneme nicht durch eine feste Anzahl von States beschrieben, sondern durch ein Muster (= eine Abfolge von Merkmalen), das aus den Trainingsäußerungen gewonnen wird. Die Idee dabei ist, auf Referenzseite eine ähnliche Auflösung wie auf Testseite zu realisieren. Die einzelnen Schritte dazu sind, dass
1. Trainingsäußerungen nach Vorgabe gesprochen wird,
2.die resultierenden Sprachsignale im festen Raster (10ms - 20 ms) (Frequenz-) analysiert und die Merkmale abgespeichert werden,
3. die Merkmalabfolge (iterativ) entsprechend der phonetischen Transkription zeitlich unterteilt wird, wobei jeweils Muster für die Phoneme ausgeschnitten werden,
4.aus den Mustern aus allen Äußerungen, die einem Phonem entsprechen, eine mittlere "zeitliche Struktur" berechnet wird bzgl. der zeitlichen Abfolge der Merkmale, der Anzahl von Merkmalen sowie der Ausprägung der Merkmale,
5. für jeden "Frame" (d.h. jeden Analyseabschnitt) der mittleren zeitlichen Struktur ein kleines Code-Book mit repräsentativen Merkmalen erstellt wird (zur Abdeckung der sprecherspezifischen Charakteristika)

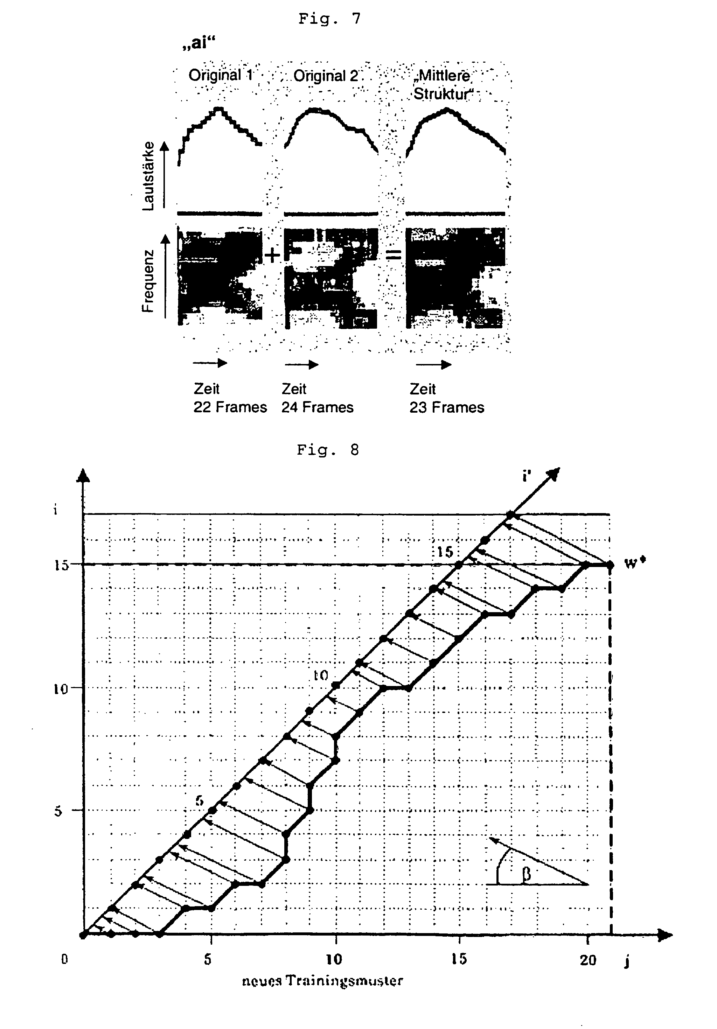

Der Schritt 4 soll anhand der Figuren 6 und 7 visualisiert werden. Gesprochen und aus verschiedenen Äußerungen heraus segmentiert werden die Muster, die für die Phonemfolge "ts" stehen. Die Mittelung eines sehr kurzen "ts" mit 11 Analysefenster und einem langen "ts" mit 17 Analysefenstern führt auf ein mittleres Muster mit 14 Analysefenstern und spektralen Merkmalen, die ebenfalls eine mittlere Charakteristik aufweisen und die "zeitliche Struktur" (charakteristische Abfolge) wiedergeben.

In dem zweiten Beispiel wurde der Gleitlaut "ai" geäußert, wobei hier die Länge der Laute und damit auch der Mittelung nahezu identisch sind, dafür bei der charakteristischen Abfolge der Merkmale der Effekt der Mittelung zu erkennen ist.

Die Beispiele zeigen eine Mittelung aus n=2 Trainingsmustern. Sinngemäß gilt dies natürlich auch für beliebige n.

Figur 8 zeigt die bei der Mittelung verwendeten Verfahren zur nichtlinearen Abbildung von i und j sowie die Projektion auf eine resultierendes Muster i'.

Für Schritt 5 wird nun die resultierende mittlere Struktur beibehalten. Es werden alle im Training beobachteten Muster nichtlinear auf diese Struktur abgebildet. Pro Frame der mittleren Struktur wird dann eine Clusterung der darauf abgebildeten Merkmale durchgeführt.

In der Erkennungsphase werden die zu erkennenden Wörter aus den Referenzen für die Phoneme entsprechend der phonetischen Transkription zusammengesetzt. Beim "traditionellen" HMM werden die States aneinandergereiht, beim vorgeschlagenen Verfahren die Referenzsegmente. Die sog. Suche (die optimale Abbildung des Testsignals auf die gebildeten Referenzen) erfolgt beim HMM dann z.B. über einen Viterbi-Algroithmus, beim vorgeschlagenen Verfahren über einen (allgemeineren) Ansatz des "Dynamic Time Warping". Bei diesen Verfahren wird der Suchraum durch die zugelassenen Steigungen beim Übergang von einem Gitterpunkt (in der Matrix aus Referenz- und Testmuster) zum nächsten aufgespannt. Dabei bedeutet eine Steigung "1" eine lineare Abbildung, eine Steigung "0" ein Kollaps des gesamten Testmusters auf einen State des Referenzmusters und Steigung "unendlich" ein Kollaps des gesamten Referenzmusters auf einen Analyseframe des Testmusters.

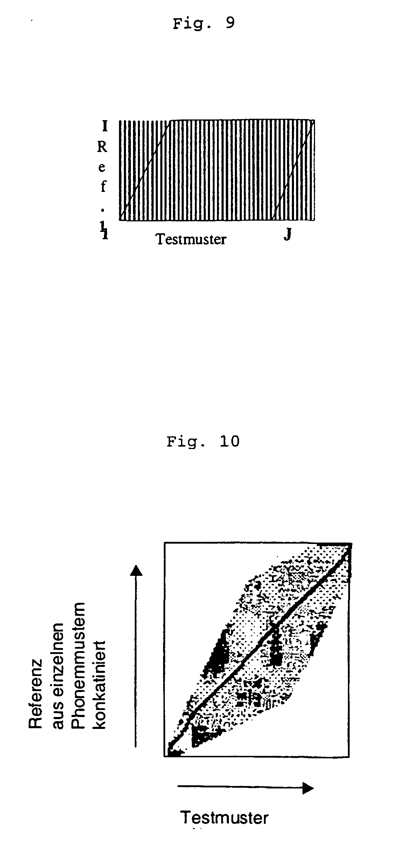

Wie in den Figuren 9 und 10 zu sehen ist, müssen beim Viterbi-Algorithmus durch die unterschiedliche Auflösung von Referenz und Test auch Steigungen "0" zugelassen werden. Beim neuen Verfahren dagegen kann die Abbildung z.B. auf einen Bereich (0,5...2) beschränkt werden, d.h. man nimmt an, dass im Vergleich zu einer mittleren Sprechgeschwindigkeit das Testsignal minimal halb so schnell und maximal doppelt so schnell gesprochen werden kann. Durch den eingeschränkten Abbildungsbereich wird die Suche "gezwungen", auch alle relevanten Musterabschnitte zu vergleichen und nicht einfach ganze Abschnitte zu überspringen.

## Patentansprüche

1. Verfahren zur Erzeugung von Sprachbausteine beschreibenden Referenzsegmenten aus gesprochenen Trainings-Sprachsignalen für Spracherkennungssysteme, mit folgenden Schritten:
- Segmentieren des Trainings-Sprachsignals in Sprachbausteine entsprechend einer vorgegebenen Transkription,
- Analysieren des Trainingssignals in einem vorbestimmten Zeitraster mit bestimmten Zeitfenstern zum Erhalten von zumindest einem Merkmalvektor für ein jedes Zeitfenster, wodurch Trainingsmuster ausgebildet werden, die jeweils Merkmalvektoren in der zeitlichen Abfolge des Trainings-Sprachsignals enthalten,
- Ermittlung einer mittleren Zeitstruktur, die eine mittlere Ausprägung von Änderungsdauer und zeitlicher Abfolge von Merkmalen der Sprachbausteine ist, für einen jeden Sprachbaustein mit einer Folge von Zeitfenstern,
- Zuordnen der Merkmalvektoren mittels einer zeitlich nichtlinearen Abbildung zu den Zeitfenstern der Sprachbausteine und Abspeichern der jeweils einem Sprachbaustein zugeordneten Merkmalvektoren in der durch die Zeitfenster vorgegebenen Abfolge als Referenzsegment.

2. Verfahren nach Anspruch 1,
**dadurch gekennzeichnet,**
**dass** die Sprachbausteine Phoneme, Diphthonge, Diphone, Triphone oder Silben sind.

3. Verfahren nach Anspruch 1 oder 2,
**dadurch gekennzeichnet,**
**dass** die Merkmale der Trainingsmuster als Merkmalvektoren mit spektralen Merkmalen, Autokorrelationsmerkmalen, LPC-Merkmalen, MFCC-Merkmalen oder CC-Merkmalen dargestellt werden.

4. Verfahren nach Anspruch 1 bis 3,
**dadurch gekennzeichnet,**
**dass** die mittlere zeitliche Abfolge durch die Mittelung der nichtlinearen Abbildungen der Trainingsmuster für den Sprachbaustein aufeinander erhalten wird.

5. Verfahren nach Anspruch 1 bis 4,
**dadurch gekennzeichnet, dass** die jeweils einem Zeitfenster zugeordneten Merkmalvektoren geclustert werden.

6. Verfahren nach Anspruch 5,
**dadurch gekennzeichnet,**
**dass** die Merkmalvektoren pro Zeitfenster auf eine bestimmte Anzahl begrenzt werden.

7. Verfahren nach Anspruch 5,
**dadurch gekennzeichnet,**
**dass** sich die Anzahl der alternativen Merkmalvektoren aus der Varianz der auf ein Zeitfenster abgebildeten Merkmalvektoren der Trainingsmuster ergibt.

8. Verfahren zur Modellierung von Spracheinheiten eines gesprochenen Testmusters in Spracherkennungssystemen, wobei Sprachbausteine beschreibende Referenzsegmente mit zeitlich strukturierte Merkmalvektoren in einem Codebuch enthalten sind, mit folgenden Schritten:
- Kombinieren mehrere Spracheinheiten darstellende Referenzmuster aus Referenzsegmenten, wobei Referenzsegmente verwendet werden, die mit einem Verfahren nach einem der Ansprüche 1 bis 7 erstellt wurden,
- Durchführen eines nichtlinearen Vergleiches der Referenzmuster mit dem Testmuster und Bestimmen jeweils eines Abstandes zwischen den Referenzmustern und dem Testmuster,
- Auswahl des Referenzmusters mit dem geringsten Abstand zum Testmuster, wobei dem Testmuster die durch die Referenzsegmente dargestellte Spracheinheit zugeordnet wird.

9. Verfahren nach Anspruch 8,
**dadurch gekennzeichnet,**
**dass** die Referenzmuster jeweils ein zu erkennendes Wort darstellen.

10. Verfahren nach Anspruch 9,
**dadurch gekennzeichnet,**
**dass** ein Referenzmuster als Konkatenation der Referenzsegmente für die Sprachbausteine entsprechend der Transkription für das zu erkennende Wort gebildet wird.

11. Verfahren nach einem der Ansprüche 8 bis 10,
**dadurch gekennzeichnet,**
**dass** der nichtlineare Vergleich mittels einer nichtlinearen Zeitanpassung des Testmuster auf die Referenzmuster für die zu erkennenden Wörter erfolgt.

12. Verfahren nach Anspruch 11,
**dadurch gekennzeichnet,**
**dass** die nichtlineare Zeitanpassung auf einen festgelegten Arbeitsbereich beschränkt wird.

13. Verfahren nach einem der Ansprüche 8 bis 12,
**dadurch gekennzeichnet,**
**dass** beim nichtlinearen Vergleich der lokale Abstand als Minimum der Abstände zwischen dem entsprechenden Merkmalvektor des Testmusters und den alternativen Merkmalvektoren der Referenzsegmente gewählt wird.

14. Verfahren nach einem der Ansprüche 8 bis 13,
**dadurch gekennzeichnet,**
**dass** bei der nichtlinearen Abbildung die Verzerrung begrenzt wird.

## Revendications

1. Procédé de production de segments de référence décrivant des blocs vocaux, à partir de signaux vocaux d'entraînement parlés pour des systèmes de reconnaissance de la voix, comprenant les étapes suivantes :
- segmentation du signal vocal d'entraînement en blocs vocaux selon une transcription prédéfinie,
- analyse du signal d'entraînement dans une trame de temps prédéterminée comprenant des fenêtres de temps déterminées afin d'obtenir au moins un vecteur caractéristique pour chaque fenêtre de temps, sur quoi des modèles d'entraînement sont formés, qui contiennent respectivement des vecteurs caractéristiques dans la séquence temporelle du signal vocal d'entraînement,
- détermination d'une structure de temps moyenne, qui est une marque de durée de modification et de séquence temporelle de caractéristiques des blocs vocaux, pour chaque bloc vocal au moyen d'une séquence de fenêtres de temps,
- affectation des vecteurs caractéristiques aux fenêtres de temps des blocs vocaux au moyen d'une application non linéaire dans le temps et mémorisation des vecteurs caractéristiques affectés à respectivement un bloc vocal dans la séquence prédéfinie au moyen des fenêtres de temps, comme segment de référence.

2. Procédé selon la revendication 1,
**caractérisé en ce**
**que** les blocs vocaux sont des phonèmes, des diphtongues, des diphones, des triphones ou des syllabes.

3. Procédé selon la revendication 1 ou 2,
**caractérisé en ce**
**que** les caractéristiques des modèles d'entraînement sont représentées comme des vecteurs caractéristiques ayant des caractéristiques spectrales, des caractéristiques d'auto-corrélation, des caractéristiques LPC, des caractéristiques MFCC ou des caractéristiques CC.

4. Procédé selon les revendications 1 à 3,
**caractérisé en ce**
**que** la séquence temporelle moyenne est obtenue par la moyenne des applications non linéaires des modèles d'entraînement pour le bloc vocal.

5. Procédé selon les revendications 1 à 4,
**caractérisé en ce**
**que** les vecteurs caractéristiques respectivement affectés à une fenêtre de temps sont mis en grappe.

6. Procédé selon la revendication 5,
**caractérisé en ce**
**que** les vecteurs caractéristiques sont limités à un certain nombre par fenêtre de temps.

7. Procédé selon la revendication 5,
**caractérisé en ce**
**que** le nombre des vecteurs caractéristiques alternatifs résulte de la variance des vecteurs caractéristiques des modèles d'entraînement représentés sur une fenêtre de temps.

8. Procédé pour la modélisation d'unités vocales d'un modèle de test parlé dans des systèmes de reconnaissance de la voix, des segments de référence décrivant des blocs vocaux, comprenant des vecteurs caractéristiques structurés dans le temps, étant contenus dans un livre de code, comprenant les étapes suivantes :
- combinaison de plusieurs modèles de référence représentant des unités vocales, à partir de segments de référence, des segments de référence étant utilisés qui ont été créés au moyen d'un procédé selon l'une quelconque des revendications 1 à 7,
- réalisation d'une comparaison non linéaire des modèles de référence avec le modèle de test et détermination d'un écart respectif entre les modèles de référence et le modèle de test,
- sélection du modèle de référence ayant l'écart le plus petit par rapport au modèle de test, l'unité vocale représentée par les segments de référence étant affectée au modèle de test.

9. Procédé selon la revendication 8,
**caractérisé en ce**
**que** les modèles de référence représentent respectivement un mot à reconnaître.

10. Procédé selon la revendication 9,
**caractérisé en ce**
**qu'**un modèle de référence est formé comme concaténation des segments de référence pour les blocs vocaux selon la transcription pour le mot à reconnaître.

11. Procédé selon l'une quelconque des revendications 8 à 10,
**caractérisé en ce**
**que** la comparaison non linéaire est réalisée pour les mots à reconnaître au moyen d'une adaptation de temps non linéaire du modèle de test aux modèles de référence.

12. Procédé selon la revendication 11,
**caractérisé en ce**
**que** l'adaptation de temps non linéaire est limitée à une plage de travail déterminée.

13. Procédé selon l'une quelconque des revendications 8 à 12,
**caractérisé en ce**
**que** lors de la comparaison non linéaire, l'écart local est sélectionné comme le minimum des écarts entre le vecteur caractéristique correspondant du modèle de test et les vecteurs caractéristiques alternatifs des segments de référence.

14. Procédé selon l'une quelconque des revendications 8 à 13,
**caractérisé en ce**
**que** la distorsion est limitée dans le cas de l'application non linéaire.

## Claims

1. Method for producing reference segments describing speech modules from spoken training voice signals for voice recognition systems, comprising the following steps:
- segmentation of the training voice signal into speech modules in accordance with a predefined transcription,
- analysis of the training signal in predetermined time slots with particular time windows in order to obtain at least one characteristic vector for each time window, as a result of which training models are formed which in each case contain characteristic vectors in the time sequence of the training voice signal,
- determination of an average time structure, which expresses the average of the change duration and timing sequence of characteristics of the speech modules, for each speech module with a string of time windows,
- assignment by means of a temporally non-linear mapping of the characteristic vectors to the time windows of the speech modules and storage of the characteristic vectors assigned in each case to a speech module in the sequence predefined by the time windows as a reference segment.

2. Method according to Claim 1,
**characterized in that**
the speech modules are phonemes, diphthongs, diphones, triphones or syllables.

3. Method according to Claim 1 or 2,
**characterized in that**
the characteristics of the training models are represented as characteristic vectors with spectral characteristics, autocorrelation characteristics, LPC characteristics, MFCC characteristics or CC characteristics.

4. Method according to Claims 1 to 3,
**characterized in that**
the average time sequence is obtained by averaging the non-linear mappings of the training models for the speech module to one another.

5. Method according to Claims 1 to 4,
**characterized in that**
the characteristic vectors assigned in each case to a time window are clustered.

6. Method according to Claim 5,
**characterized in that**
the characteristic vectors per time window are limited to a particular number.

7. Method according to Claim 5,
**characterized in that**
the number of alternative characteristic vectors results from the variance in the characteristic vectors for the training models, which are mapped onto a time window.

8. Method for modelling speech units of a spoken test model in voice recognition systems, whereby reference segments describing speech modules are contained in a code book with time structured characteristic vectors, comprising the following steps:
- combination of reference models formed from reference segments and representing a plurality of speech units, whereby in particular reference segments are used which have been created using a method according to one of Claims 1 to 7,
- execution of a non-linear comparison of the reference models with the test model and determination in each case of a distance between the reference models and the test model,
- selection of the reference model having the smallest distance from the test model, whereby the speech unit represented by the reference segments is assigned to the test model.

9. Method according to Claim 8,
**characterized in that**
the reference models represent a word to be recognized in each case.

10. Method according to Claim 9,
**characterized in that**
a reference model is formed for the word to be recognized as a concatenation of the reference segments for the speech modules in accordance with the transcription.

11. Method according to one of Claims 8 to 10,
**characterized in that**
the non-linear comparison is effected by means of a non-linear time adjustment of the test model to the reference models for the words to be recognized.

12. Method according to Claim 11,
**characterized in that**
the non-linear time adjustment is restricted to a defined working range.

13. Method according to one of Claims 8 to 12,
**characterized in that**
with regard to the non-linear comparison the local distance is chosen as the minimum of the distances between the corresponding characteristic vector of the test model and the alternative characteristic vectors of the reference segments.

14. Method according to one of Claims 8 to 13,
**characterized in that**
the distortion is limited in the case of the non-linear mapping.
